# EUROPÄISCHE PATENTSCHRIFT

(11) **EP 2 162 589 B1**
(45) Veröffentlichungstag und Bekanntmachung des Hinweises auf die Patenterteilung: **18.04.2012**
(21) Anmeldenummer: 08773788.8
(22) Anmeldetag: 01.07.2008
(51) Int. Cl.: E04H 9/02

(54) **DÄMPFUNGSVORRICHTUNG UND BEFESTIGUNGSANORDNUNG**
DAMPING DEVICE AND FASTENING ARRANGMENT
DISPOSITIF D'AMORTISSEMENT ET SYSTÈME DE FIXATION

(30) Priorität: 11.07.2007 DE 102007032313
(43) Veröffentlichungstag der Anmeldung: 17.03.2010
(73) Patentinhaber: fischerwerke GmbH & Co. KG, 72178 Waldachtal (DE)
(72) Erfinder: BOHNET, Hartmut, 72178 Waldachtal (DE); LINKA, Martin, 72160 Horb a.N. (DE); MALLEE, Rainer, 72178 Waldachtal (DE); SPIETH, Hannes, 70794 Filderstadt (DE); PAMPANIN, Stefano, I-27100 Pavia (IT); MAIER, Knut, 72184 Eutingen (DE); KAUPP, Klaus, 72178 Waldachtal (DE)
(86) Internationale Anmeldenummer: PCT/EP2008/005355
(87) Internationale Veröffentlichungsnummer: WO 2009/007039

(56) Entgegenhaltungen:
- EP-A- 0 816 692
- EP-A- 1 801 322
- DE-A1- 10 129 083
- DE-A1- 10 145 857

## Beschreibung

Die Erfindung betrifft eine Dämpfungsvorrichtung gemäß dem Oberbegriff des Patentanspruchs 1 sowie eine Befestigungsvorrichtung mit dem Oberbegriff des Patentanspruchs 15.

Eine solche Dämpfungsvorrichtung mit einer Durchführungsöffnung für einen Anker ist aus der Druckschrift DE 196 25 176 A1 bekannt, wobei der Anker dazu dient, einen Befestigungsgegenstand an einer Wand zu befestigen. Die Dämpfungsvorrichtung umfasst ein elastisches Element, welches schockartige Stöße, die zum Beispiel bei einem Erdbeben auftreten, dämpfen kann, so dass der Anker nicht zu sehr belastet wird. Dabei nimmt die zur Verformung des elastischen Elements erforderliche Kraft mit zunehmender Verformung immer weiter zu. Ein Nachteil dieser Konstruktion liegt darin, dass sich der Befestigungsgegenstand aufgrund dieses Verhaltens des elastischen Elements schon merklich bewegen kann, wenn relativ geringe Kräfte auf den Befestigungsgegenstand einwirken. Dadurch kann es bereits bei geringen Belastungen zu einer Verschiebung des Befestigungsgegenstands gegenüber der Wand kommen.

Eine weitere Dämpfungsvorrichtung ist aus der Druckschrift WO 03/069096 A1 bekannt. Die Figuren 14 bis 16 dieser Druckschrift zeigen eine Verbindung von zwei Blechen mit einer Dämpfungsvorrichtung. An einem der Bleche ist durch Stanzen die Dämpfungsvorrichtung ausgebildet. Es handelt sich um eine Lochstanzung mit einem radial verlaufenden Steg mit mittiger Bohrung zur Aufnahme eines Ankers. Unter einer Gebrauchslast verformt sich der Steg zunächst elastisch. Wird allerdings die Gebrauchslast, beispielsweise durch schockartige Stöße infolge eines Erdbebens überschritten, so kommt es zu einer plastischen Verformung des Steges, wodurch Energie dissipiert und der Stoß gedämpft wird. Nachteilig an dieser Lösung ist, dass leichte Stöße unter Gebrauchslast nicht gedämpft werden und eine Dämpfung erst durch Plastizieren des Materials eintritt. Zudem kann bedingt durch den einfachen Aufbau, bei der ein Element sowohl für die Dämpfung als auch für die Energiedissipation verwendet wird, die Dämpfungsvorrichtung nur für ein eng begrenztes Spektrum an Stößen ausgelegt werden. Schließlich zeigt EP 0816692 A eine Dämpfungsvorrichtung entsprechend dem Oberbegriff des Anspruch 1.

Der vorliegenden Erfindung liegt die Aufgabe zugrunde, eine gegenüber dem Stand der Technik verbesserte Dämpfungsvorrichtung zu schaffen, die ein weites Spektrum von dynamischen Belastungen dämpfen kann, sich aber unter Gebrauchslast nur unmerklich verformt.

Diese Aufgabe wird erfindungsgemäß durch eine Dämpfungsvorrichtung mit den Merkmalen des Anspruchs 1 sowie einer Befestigungsanordnung mit einer Dämpfungsvorrichtung mit den Merkmalen des Anspruchs 15 gelöst. Die erfindungsgemäße Dämpfungsvorrichtung mit einer Durchführungsöffnung für einen Anker und mit einem Dämpfungselement weist ein Dissipationselement auf, das bis zum Überschreiten einer maximalen Relativkraft zwischen dem Anker und einem durch den Anker befestigten Befestigungsgegenstand elastisch verformbar ist. Ein Dissipationselement ist in diesem Zusammenhang ein Element, das Bewegungsenergie in thermische Energie durch eine elastische, elastisch-plastische oder plastische Verformung umwandelt. Nach dem Überschreiten der maximalen Relativkraft wird das Dissipation Element elastisch-plastisch oder plastisch verformt.

Die Dämpfungsvorrichtung ist so aufgebaut, dass das Dämpfungselement und das Dissipationselement räumlich getrennte Funktionsbereiche darstellen, wodurch eine eindeutige Zuordnung der Funktion des Dissipationselements und des Dämpfungselements möglich ist. Die Dämpfungsvorrichtung kann ein- oder mehrstückig ausgeführt sein. Es ist denkbar, dass das Dämpfungselement und das Dissipationselement schon bei geringen Lasten parallel und gleichzeitig wirken. Möglich ist auch eine Ausgestaltung, bei der zunächst nur das Dämpfungselement oder nur das Dissipationselement wirkt, und erst nach Überschreiten einer bestimmten Relativkraft zwischen dem Anker und einem durch den Anker befestigten Befestigungsgegenstand sowohl das Dämpfungselement als auch das Dissipationselement wirken. Hierdurch ist es möglich, die Dämpfungsvorrichtung optimal für den vorgesehenen Einsatzzweck auszulegen. So kann beispielsweise die Dämpfungsvorrichtung so ausgelegt sein, dass sich das Dissipationselement bei leichten Stößen linear elastisch verhält und das Dämpfungselement parallel hierzu wirkt. Das Dissipationselement verformt sich unter einer Gebrauchslast, die geringer ist als die maximale Relativkraft, nur geringfügig. Die Gebrauchslast ist keine dynamische Last sondern eine statische Last, beispielsweise eine Querkraft, die von einem Befestigungsgegenstand auf den Anker wirkt. Wirken zusätzliche dynamische Lasten, durch Stöße oder Schwingungen, so kann sich das Dissipationselement elastisch verformen, so dass es gemeinsam mit dem Dämpfungselement die dynamischen Lasten dämpft. Dagegen wird sich das Dissipationselement bei starken Stößen, bei denen eine große Energiedissipation notwendig ist, plastisch verformen. Hierdurch werden Lastspitzen mit der Folge einer Überbeanspruchung des Ankers durch die Dämpfungsvorrichtung abgemindert. Unter den Begriff "Anker" ist in diesem Zusammenhang ein Befestigungselement zu verstehen, wie beispielsweise eine Schraube oder ein Dübel, wobei die Dämpfungsvorrichtung insbesondere zum Schutz von dübelartigen Befestigungselementen wie Bolzen- und Hülsenankern, chemischen Befestigungssystemen wie Injektionsankern oder aber Rahmendübel aus Kunststoff vorgesehen ist.

Eine bevorzugte Ausgestaltungsform der erfindungsgemäßen Dämpfungsvorrichtung ist derart gestaltet, dass sie bis zum Überschreiten der maximalen Relativkraft als Feder-Dämpfer-Element wirkt. Das Dissipationselement wirkt hierbei insbesondere als Feder. Unter "Feder" ist in diesem Zusammenhang ein Element zu verstehen, das elastisch, insbesondere linearelastisch verformbar ist. Wird die maximale Relativkraft nicht überschritten, so dämpft die Dämpfungsvorrichtung in die dynamische Belastung, ohne dass es zu einer Beschädigung oder bleibenden Verformung der Dämpfungsvorrichtung kommt. Alternativ könnte das Dämpfungselement auch erst nach Überschreiten der maximalen Relativkraft wirken.

In einer weiteren Ausgestaltungsform der erfindungsgemäßen Dämpfungsvorrichtung ist mindestens ein Dissipationselement vorgesehen, das eingerichtet ist, sich beim Überschreiten einer maximalen Relativkraft zwischen dem Anker und einem durch den Anker befestigten Befestigungsgegenstand plastisch zu verformen, und sich nach dem Überschreiten der maximalen Relativkraft schon unter Einwirkung einer Relativkraft plastisch zu verformen, die betragsmäßig kleiner als die maximale Relativkraft ist. Hierdurch wird unterhalb der maximalen Relativkraft, also im Bereich der vorgesehenen Gebrauchslast, ein fester Halt gewährleistet, der eine Verschiebung des Befestigungsgegenstands verhindert. Kommt es dagegen beispielsweise in Folge eines Erdbebens zu einer schockartigen Überschreitung der maximalen Relativkraft, kann die Energie des Schocks und eventueller folgender Schocks durch eine plastische Verformung absorbiert werden. Ein solches Verhalten des Dissipationselements entsteht erfindungsgemäß dadurch, dass es eine anfängliche plastische Verformung erleichtert, das Dissipationselement weiter zu verformen. Dieses Verhalten wird beispielsweise bei stabförmigen Gegenständen beobachtet, die gestaucht werden. Sind derartige Gegenstände einmal verbogen, so lassen sie sich leichter noch weiter verformen. In diesem Zusammenhang soll "plastische Verformung" auch die Relativbewegung zweier getrennter Bestandteile eines zerbrochenen Dissipationselements einschließen.

In einer weiteren bevorzugten Ausführungsform ist ein Dissipationselement als radiales Dissipationselement ausgebildet, das sich radial zwischen der Durchführungsöffnung und einer Außenfläche erstreckt und eingerichtet ist, sich beim Überschreiten einer maximalen radialen Relativkraft zwischen dem Anker und einem durch den Anker befestigten Befestigungsgegenstand plastisch zu verformen, und sich nach dem Überschreiten der maximalen radialen Relativkraft schon unter Einwirkung einer radialen Relativkraft plastisch zu verformen, die betragsmäßig kleiner ist als die maximale Relativkraft. Hierdurch ist das radiale Dissipationselement geeignet, Stöße zu dämpfen, die parallel zu der Oberfläche der Wand gerichtet sind.

In einer Weiterbildung der bevorzugten Ausführungsform sind mehrere sich radial erstreckende und gebogene Dissipationselemente vorgesehen. Dies hat den Vorteil, dass sich die einzelnen radialen Dissipationselemente besser verformen können, ohne dass ein radiales Dissipationselement aufgrund einer übergroßen mechanischen Beanspruchung bricht, so dass radial gerichtete Stöße wiederholt gedämpft werden können.

In noch einer Weiterbildung der bevorzugten Ausführungsform ist die Außenfläche als Außenhülse ausgebildet, und es ist eine Wand der Durchführungsöffnung als Innenhülse ausgebildet. Neben einem einfachen Aufbau wird hierdurch erreicht, dass das radiale Dissipationselement bzw. die radialen Dämpfungselemente gleichzeitig gestaucht und gestreckt werden, so dass eine derartige Dämpfungsvorrichtung eine Vielzahl von Schwingungen in unterschiedlichen Richtungen dämpfen kann.

In einer weiteren bevorzugten Ausführungsform ist ein Dissipationselement als ein achsparalleles Dissipationselement ausgebildet, das sich parallel zu der Durchführungsöffnung erstreckt und eingerichtet ist, sich beim Überschreiten einer maximalen achsparallelen Relativkraft zwischen dem Anker und einem durch den Anker befestigten Befestigungsgegenstand plastisch zu verformen, und sich nach dem Überschreiten der maximalen achsparallelen Relativkraft schon unter Einwirkung einer achsparallelen Relativkraft plastisch zu verformen, die betragsmäßig kleiner ist als die maximale achsparallele Relativkraft. Dadurch ist das achsparallele Dissipationselement geeignet, Stöße zu dämpfen, die senkrecht zu der Wand gerichtet sind. Das achsparallele Dissipationselement kann zudem derart ausgebildet sein, dass es auch als radiales Dissipationselement wirkt.

In einer Weiterbildung der weiteren bevorzugten Ausführungsform bildet das achsparallele Dissipationselement einen Ring, dessen Symmetrieachse sich parallel zu der Durchführungsöffnung erstreckt, wodurch eine Ergänzung insbesondere für eine Befestigung durch einen zentralen Anker erreicht wird.

In noch einer Weiterbildung der bevorzugten Ausführungsform sind mehrere achsparallele Dissipationselemente vorgesehen. Gegenüber einem einzelnen Dissipationselement hat diesen den Vorteil, dass sich die einzelnen achsparallelen Dissipationselemente besser verformen können, ohne dass ein achsparalleles Dissipationselement aufgrund einer übergroßen mechanischen Beanspruchung bricht, so dass achsparallel gerichtete Stöße wiederholt gedämpft werden können.

In noch einer Weiterbildung der bevorzugten Ausführungsform sind die mehreren achsparallelen Dissipationselemente über einen Basisring miteinander verbunden. Dadurch stabilisieren sich die einzelnen Dissipationselemente gegenseitig gegen radiale Kräfte.

In einer weiteren Ausführungsform der erfindungsgemäßen Dämpfungsvorrichtung ist das Dissipationselement und das Dämpfungselement aus unterschiedlichen Kunststoffen hergestellt. Mit unterschiedlichen Kunststoffen ist es möglich, die unterschiedlichen funktionalen Eigenschaften der beiden Elemente optimal einzustellen. Bevorzugt ist insbesondere, dass das Dissipationselement oder das Dämpfungselement aus einem bewehrten, insbesondere einen mit Fasern bewehrten Kunststoff, hergestellt ist.

Eine weitere bevorzugte Ausführungsform der erfindungsgemäßen Dämpfungsvorrichtung weist ein einstückiges Bauteil auf, mit einem ersten Teilbereich, der als Dissipationselement wirkt, und einem zweiten Teilbereich, der als Dämpfungselement wirkt. Ein solches Bauteil kann beispielsweise als Zweikomponentenspritzgussverfahren hergestellt werden, wodurch eine einfache und kostengünstige Herstellung möglich ist.

Bei einer weiteren bevorzugten Ausführungsform der erfindungsgemäßen Dämpfungsvorrichtung ist das Dissipationselement eine Tellerfeder. Je nach Ausgestaltung kann die Tellerfeder radial oder normal belastet werden.

Die erfindungsgemäßen Dämpfungsvorrichtungen werden bevorzugt in einer erfindungsgemäßen Befestigungsanordnung eingesetzt. Dabei ist die Dämpfungsvorrichtung mit zumindest teilweise zwischen dem Anker und einem Befestigungsgegenstand angeordnet, so dass Kräfte vom Befestigungsgegenstand über die Dämpfungsvorrichtung auf den Anker übertragen werden. Die Dämpfungsvorrichtung dient dazu, schockartige Belastungen wie Stöße, aber auch Schwingungen auszudämpfen, ohne dass es zu Lastspitzen mit der Folge einer Überbeanspruchung des Ankers kommt. Die Dämpfungsvorrichtung ist dabei so ausgelegt, dass das Dissipationselement die Gebrauchslast ohne merkliche Verformung übertragen kann.

Die Erfindung wird nachfolgend anhand von fünf Ausführungsbeispielen näher beschrieben.

Es zeigen:
- Figur 1A: eine Schnittansicht einer Dämpfungsvorrichtung gemäß einer ersten Ausführungsform;
- Figur 1 B: eine weitere Schnittansicht der Dämpfungsvorrichtung gemäß der ersten Ausführungsform;
- Figur 2: eine Schnittansicht einer Dämpfungsvorrichtung gemäß einer zweiten Ausführungsform;
- Figur 3A: eine Schnittansicht einer Dämpfungsvorrichtung gemäß einer dritten Ausführungsform;
- Figur 3B: eine weitere Schnittansicht der Dämpfungsvorrichtung gemäß der dritten Ausführungsform;
- Figur 4: eine Schnittansicht einer Dämpfungsvorrichtung gemäß einer vierten Ausführungsform; und
- Figur 5: eine Schnittansicht einer Dämpfungsvorrichtung gemäß einer fünften Ausführungsform.

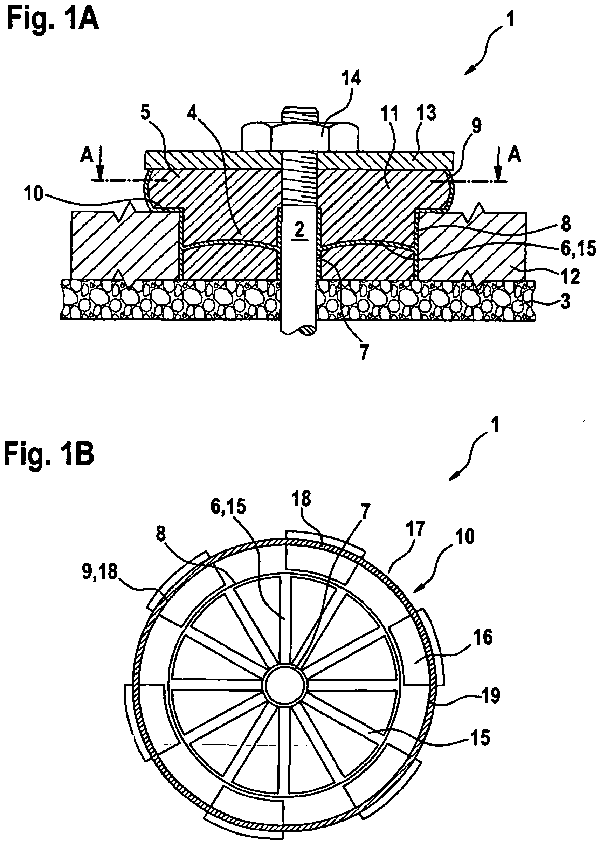

Figur 1A zeigt eine Schnittansicht einer Dämpfungsvorrichtung 1 gemäß einer ersten Ausführungsform, in welche ein Anker 2 eingeführt ist. Im Folgenden werden die Ausdrücke "radial" und "achsparallel" verwendet. Diese beziehen sich auf die Achse des Ankers 2, der in die Dämpfungsvorrichtung 1 eingeführt und in einer Wand 3 verankert ist. "Radial" bedeutet daher senkrecht zur Längsachse des Ankers 2 oder parallel zu der Wand 3, und "achsparallel" bedeutet parallel zur Längsachse des Ankers 2 oder senkrecht zu der Wand 3. Die Dämpfungsvorrichtung 1 umfasst einen vorderen Abschnitt 4 und einen hinteren Abschnitt 5, wobei die Begriffe "vorn" und "hinten" sich auf die Einbringrichtung des Ankers 2 beziehen. Im vorderen Abschnitt 4 ist ein erstes, radiales und gebogenes Dissipationselement 6 vorgesehen, welches sich zwischen einer Innenhülse 7 und einer Außenhülse 8 erstreckt. Die Verbindungspunkte des Dissipationselements 6 mit der Innenhülse 7 und der Außenhülse 8 liegen in einer sich radial erstreckenden Ebene. Diese relative Lage der beiden Verbindungspunkte ist wichtig für das Knickverhalten des Dissipationselements 6. Im hinteren Abschnitt 5 ist ein zweites, achsparalleles und ringförmiges Dissipationselement 9 vorgesehen, welches in Achsrichtung gebogen ist. Das zweite Dissipationselement 9 ist an seinem vorderen Rand mit dem hinteren Rand der Außenhülse 8 über einen Auflageabschnitt 10 verbunden. Ein vorderer Randpunkt und ein hinterer Randpunkt des achsparallelen Dissipationselements 9 liegen jeweils auf einer achsparallelen Linie. Diese relative Lage der beiden Randpunkte ist wichtig für das Knickverhalten des Dissipationselements 9. Das erste, radiale Dissipationselement 6, die Innenhülse 7, die Außenhülse 8, das zweite, achsparallele Dissipationselement 9 und der Auflageabschnitt 10 sind einstückig aus einem Werkstoff mit einem hohen Elastizitätsmodul (> 40 kN / mm²), vorzugsweise Metall und insbesondere Stahl, gefertigt. Das Innere zwischen den Dissipationselementen 6, 9 ist mit einem Dämpfungselement 11 wie beispielsweise einem Metallschaum, einem Kunststoff oder einem Gummiwerkstoff gefüllt. Der vordere Bereich 4 der Dämpfungsvorrichtung 1 ist in einer Aussparung aufgenommen, welche in einem Befestigungsgegenstand 12 ausgebildet ist. Der Auflageabschnitt 10 liegt auf dem Befestigungsgegenstand 12 auf. Der Befestigungsgegenstand 12 selbst liegt an der Wand 3 an. Auf dem hinteren Abschnitt 5 der Dämpfungsvorrichtung 1 liegt eine Unterlegplatte 13 auf. Diese kann auch mit der Dämpfungsvorrichtung 1 fest verbunden sein. Der Anker 2 ist durch die Unterlegplatte 13 und eine Durchführungsöffnung in der Dämpfungsvorrichtung 1, die teilweise von der Innenhülse 7 umgeben ist, hindurchgeführt und in einem Loch in der Wand 3 verankert. Auf den Anker 2 ist eine Mutter 14 aufgeschraubt.

Figur 1B zeigt eine weitere Schnittansicht der Dämpfungsvorrichtung 1 gemäß der ersten Ausführungsform entlang der Linie A-A aus Figur 1A ohne den Dämpfungswerkstoff. Das radiale Dissipationselement 6 weist mehrere sich radial erstreckende Stege 15 auf. Jeder dieser Stege 15 kann für sich allein Energie dissipieren. In dem Auflageabschnitt 10 sind Öffnungen 16 ausgebildet, so dass dieser sich leichter verformen kann. Das zweite, achsparallele Dissipationselement 9 weist entlang seines Umfangs mehrere Aussparungen 17 auf. Das zweite, achsparallele Dissipationselement 9 weist somit Dissipationsabschnitte 18 auf, die durch die Aussparungen 17 voneinander getrennt, aber über den Auflageabschnitt 10 und einen Basisring 19 miteinander verbunden sind.

Wenn ein Stoß eine radiale Relativbewegung des Befestigungsgegenstands 12 zu der Wand 3 verursacht, werden ein Steg 15 und dessen benachbarte Stege 15 gestaucht, wodurch diese sich mehr durchbiegen, während ein gegenüberliegender Steg 15 und dessen benachbarte Stege 15 gestreckt wird und eventuell die Außenhülse 8 nach innen gebogen wird. Die Biegung und Verformung der Stege 15 und der Außenhülse 8 erfolgt zunächst elastisch und danach im Falle einer vorgegebenen maximalen Relativkraft elastisch-plastisch oder plastisch, wobei das Dämpfungselement 11 dämpfend wirkt. Die ursprüngliche, vorgeprägte Biegung der Stege 15 sorgt dafür, dass sich die gestauchten Stege 15 in einer bestimmten Richtung verbiegen und erleichtert die Verbiegung selbst darüber hinaus. Diese ursprüngliche Biegung ist nicht unbedingt erforderlich. Wenn ein weiterer Stoß daraufhin eine radiale Relativbewegung des Befestigungsgegenstandes 12 zu der Wand 3 in der entgegengesetzten Richtung verursacht, werden die zuvor gestauchten Stege 15 gestreckt, während gleichzeitig die zuvor gestreckten Stege 15 gestaucht werden. Dieser Wechsel kann sich bei einer elastischen Verformung der Stege 15 beliebig oft wiederholen. Die Stöße werden durch den Dämpfungswerkstoff 11 weiter gedämpft. Das Dämpfungselement 11 sorgt auch dafür, dass die Befestigung des Befestigungsgegenstand 12 nicht so weit beschädigt wird, dass dieses sich löst, wenn beispielsweise ein Steg 15 oder mehrere Stege 15 plastisch verformt oder durchgebrochen sind. Wenn ein Stoß eine Relativbewegung des Befestigungsgegenstand 12 von der Wand 3 weg verursacht, wird das zweite Dissipationselement 9 gestaucht, wodurch diese sich die Dissipationsabschnitte 18 zunächst elastisch, und dann im Falle einer vorgegebenen maximalen Relativkraft elastisch-plastisch oder plastisch durchbiegen. Auch die Dissipationsabschnitte 18 können gerade, ohne Vorkrümmung, ausgebildet sein.

Für die folgenden Ausführungsformen werden identische Bezugszeichen gefolgt von einem Kleinbuchstaben für funktionsgleiche Elemente verwendet.

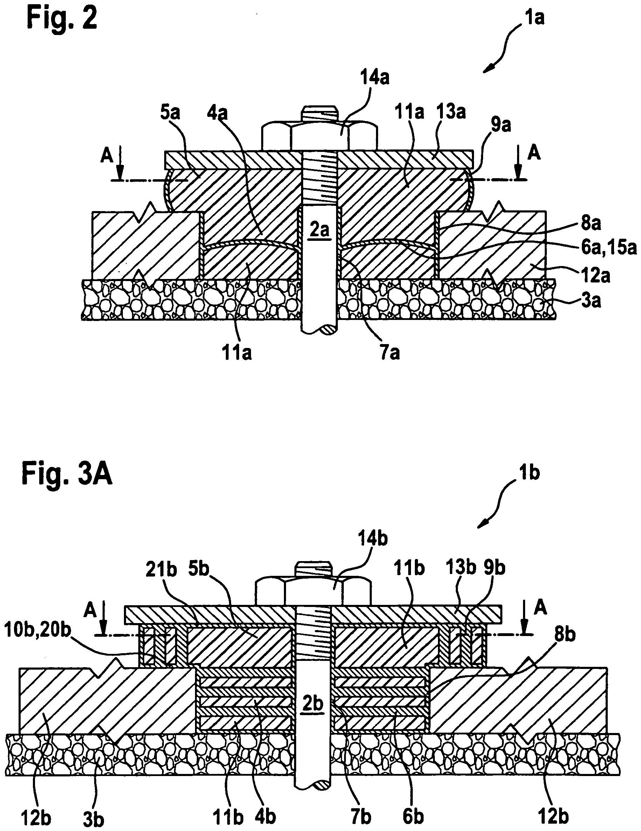

Figur 2 zeigt eine Schnittansicht einer Dämpfungsvorrichtung 1a gemäß einer zweiten Ausführungsform. Der vordere Bereich 4a bildet ein vorderes Dämpfungsteil und der hintere Bereich 5a bildet ein hinteres Dämpfungsteil. Ein Auflageabschnitt zwischen der Außenhülse 8a und dem achsparallelen Dissipationselement 9a fehlt. Das Dämpfungselement 11a in dem hinteren Bereich 5a hängt ebenfalls nicht mit dem Dämpfungselement 11a in dem vorderen Bereich 4a zusammen. Die Dämpfungsvorrichtung aus Figur 2 unterscheidet sich von der Dämpfungsvorrichtung aus den Figuren 1A und 1B folglich dadurch, dass sie zweiteilig ausgebildet ist. Gegebenenfalls können auch mehr als zwei Teile vorgesehen sein. Die zweiteilige Ausbildung bewirkt, dass die Verformung des vorderen Bereichs 4a und des hinteren Bereichs 5a voneinander unabhängig sind. Da ein Auflageabschnitt nicht vorhanden ist, lässt sich das erste Dissipationselement 6a leichter verformen. Ansonsten ist die Dämpfungsvorrichtung aus Figur 2 mit der Dämpfungsvorrichtung aus den Figuren 1A und 1B identisch.

Figur 3A zeigt eine Schnittansicht einer Dämpfungsvorrichtung 1b gemäß einer dritten Ausführungsform. Die Dämpfungsvorrichtung 1b umfasst einen vorderen Abschnitt 4b und einen hinteren Abschnitt 5b. In dem vorderen Abschnitt 4b sind mehrere radiale stiftförmige Dissipationselemente 6b vorgesehen, die sich in drei Reihen zwischen einer Innenhülse 7b und einer Außenhülse 8b erstrecken. Im hinteren Abschnitt sind mehrere achsparallele Dissipationselemente 9b vorgesehen, die sich zwischen einer vorderen Auflagefläche 20b und einer hinteren Auflagefläche 21b erstrecken und in zwei Ringen angeordnet sind. Das radiale Dissipationselement 6b, die Innenhülse 7b, die Außenhülse 8b, die achsparallelen Dissipationselemente 9b und der Auflageabschnitt 10b sind einstückig, beispielsweise aus einem Werkstoff mit einem hohen Elastizitätsmodul (> 40 kN / mm²), vorzugsweise Keramik, gefertigt. Das Innere der Dämpfungsvorrichtung 1 b ist mit einem Dämpfungselement 11 b, beispielsweise einem Metallschaum oder einem Gummi gefüllt. Alternativ ist es denkbar, dass die Dämpfungsvorrichtung 1b aus Kunststoff hergestellt ist, wobei die Dissipationselemente 6b, 9b und das Dämpfungselement 11b aus unterschiedlichen Kunststoffen besteht. Die Dämpfungsvorrichtung 1b kann einstückig, beispielsweise im Zweikomponentenspritzgießverfahren hergestellt sein. So können beispielsweise die Dissipationselemente 6b, 9b aus einem faserverstärkten Kunststoff hergestellt sein, wodurch eine hohe Festigkeit und Elastizität sowie eine geringe Verformung der Dissipationselemente unter Gebrauchslast erreicht wird. Durch einen entsprechend großen Faseranteil kommt es aber zu einem spröden Verhalten des Kunststoffs, was dem gewünschte Verhalten der Dämpfungsvorrichtung im Falle einer plastischen Verformung entgegenkommt.

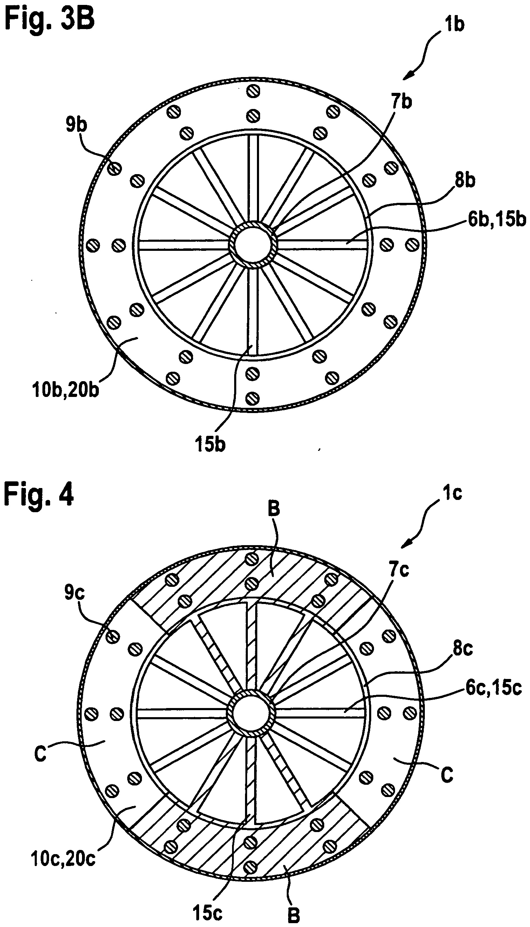

Figur 3B zeigt eine weitere Schnittansicht der Dämpfungsvorrichtung 1b gemäß der dritten Ausführungsform entlang der Linie A-A aus Figur 3A ohne das Dämpfungselement 11b. Das erste, radiale Dissipationselement 6b ist um die Innenhülse 7b herum angeordnet. Die Stege 15b des Dissipationselements 6b sind beispielsweise aus Keramik oder faserverstärktem Kunststoff gefertigt und brechen schlagartig durch, wenn sie durch einen Stoß derart beansprucht werden, dass sich nach einer elastischen Verformung in eine elastisch-plastische oder rein plastische Verformung übergehen. Sie erfüllen jedoch ihre Aufgabe einer stabilen Befestigung des Befestigungsgegenstand 12b an der Wand 3b unter Gebrauchslast, also unterhalb einer definierten maximalen Relativkraft die von der Dämpfungsvorrichtung 1 b zwischen dem Anker 2b und dem Befestigungsgegenstand 12b übertragen wird. Das Dämpfungselement 1b kann den Raum zwischen dem Anker 2b und dem Befestigungsgegenstand 12b ganz oder teilweise ausfüllen. Die Stöße werden durch das Dämpfungselement 11b aber auch durch das Dissipationselement 6b gedämpft.

Die in Figur 4 dargestellte Dämpfungsvorrichtung 1 c unterscheidet sich gegenüber der in Figur 3B dargestellte Dämpfungsvorrichtung 1b dadurch, dass sie in Segmente B, C unterteilt ist, die sich hinsichtlich ihres Dämpfungsverhaltens unterscheiden. Somit ist es möglich, abhängig von der Richtung der angreifenden Lasten eine optimale Abstimmung der Dissipationselemente 6c, 9c und des Dämpfungselements 11c zu erreichen, wobei die Dissipationselemente 6c, 9c und das Dämpfungselement 11c sich in ihren geometrischen Eigenschaften und im Material in den einzelnen Segmenten B, C voneinander unterscheiden können. Ohne den Erfindungsgedanken zu verlassen, ist eine Unterteilung in weitere Segmente möglich.

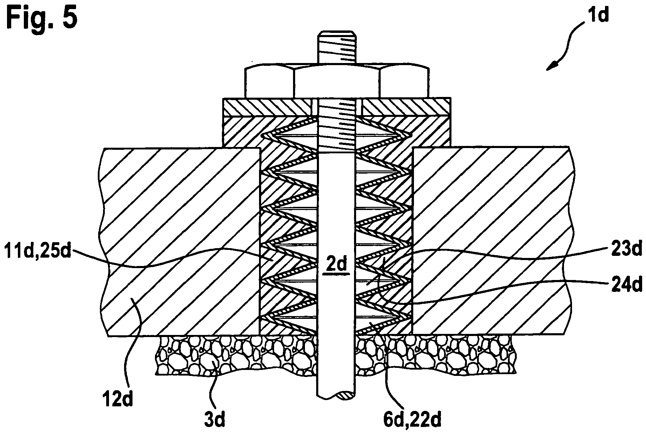

Figur 5 zeigt eine weitere erfindungsgemäße Befestigungsvorrichtung 1d mit einer Öffnung für einen Anker 2d, der in einer Wand 3d verankert ist. Die Dämpfungsvorrichtung 1d befindet sich zwischen dem Anker 2d und einem Befestigungsgegenstand 12d und bildet gemeinsam mit diesen eine Befestigungsanordnung. Als Dissipationselemente 6d weist die Befestigungsvorrichtung. 1d Tellerfedern 22d auf. Die Tellerfedern 22d sind derart angeordnet, dass immer zwei Tellerfedern 22d sich mit ihren nach außen gewölbten Seiten 23d oder mit ihren nach innen gewölbten Seiten 24d gegenüber liegen und einander berühren. Der Zwischenraum 25d zwischen den nach außen gewölbten Seiten 23d der Tellerfedern 22d ist mit einem Dämpfungselement 11d, beispielsweise aus Gummi oder Kunststoff gefüllt. Sowohl die Tellerfedern 22d als auch das Dämpfungselement 11d berühren den Befestigungsgegenstand 12d, so dass Kräfte, die quer zur Achse des Ankers 2d wirken, über die Tellerfedern 22d und das Dämpfungselement 11d übertragen werden. Die Tellerfedern 22d sind derart gewählt, dass sie sich unter Gebrauchslast nur geringfügig verformen. Bei schockartiger Belastung, beispielsweise durch einen Stoß oder durch Schwingungen, verformen sich in die Tellerfedern 22d zunächst elastisch, bei Überschreiten einer maximalen Relativkraft zwischen dem Anker 2d und einem durch den Anker 2d befestigten Befestigungsgegenstand 12d sind sie dann elastisch-plastisch oder plastisch verformbar. Die Tellerfedern 22d und das Dämpfungselement 11d wirken als Feder-Dämpfer-Element. Denkbar ist, dass je zwei Tellerfedern 22d mit einem Segment des Dämpfungselements 11d einstückig verbunden sind, so dass die Dämpfungsvorrichtung 1d modular aufbaubar ist. Hierbei können sich die einzelnen Tellerfedern 22d und die einzelnen Segmente des Dämpfungselements 11d in ihrer Geometrie und ihren Materialeigenschaften unterscheiden. Durch eine Kombination von verschiedenen Tellerfedern 22d und Segmenten des Dämpfungselements 11d ist eine optimale Auslegung der Dämpfungsvorrichtung 1d hinsichtlich Dämpfung und Verformung unter Gebrauchslast möglich. Je nach Anwendungsfall können die Tellerfedern 22d durch Unterlegscheiben oder andere Scheiben mit Durchgangsbohrung ersetzt werden. Eine Anlage der Dämpfungsvorrichtung 1d über ihren gesamten Umfang am Befestigungsgegenstand 12d ist nicht zwingend notwendig.

### Bezugszeichenliste

### Dämpfungsvorrichtung und Befestigungsanordnung

- 1, 1a, 1b, 1c, 1d: Dämpfungsvorrichtung
- 2, 2a, 2b, 2d: Anker
- 3, 3a, 3b, 3d: Wand
- 4, 4a, 4b: vorderer Abschnitt der Dämpfungsvorrichtung 1
- 5, 5a, 5b: hinterer Abschnitt der Dämpfungsvorrichtung 1
- 6, 6a, 6b, 6c, 6d: erstes Dissipationselement
- 7, 7a, 7b, 7c: Innenhülse
- 8, 8a, 8b, 8c: Außenhülse
- 9, 9a, 9b, 9c: zweites Dissipationselement
- 10, 10b, 10c, 10d: Auflageabschnitt
- 11, 11a, 11b, 11d: Dämpfungselement
- 12, 12a, 12b, 12c, 12d: Befestigungsgegenstand
- 13, 13a, 13b: Unterlegplatte
- 14, 14a, 14b, 14d: Mutter
- 15, 15a, 15c: radial erstreckende Stege des Dissipationselements 6
- 16: Öffnung im Auflageabschnitt 10
- 17: Aussparung
- 18: Dissipationsabschnitt
- 19: Basisring
- 20b: vordere Auflagefläche
- 21b hintere: Auflagefläche
- 22d: Tellerfeder
- 23d: nach außen gewölbte Seite der Tellerfeder 22d
- 24d: nach innen gewölbte Seite der Tellerfeder 22d
- 25d: Zwischenraum zwischen den nach außen gewölbten Seiten 23d

## Patentansprüche

1. Dämpfungsvorrichtung (1, 1a, 1b, 1c, 1d) mit einer Durchführungsöffnung für einen Anker (2, 2a, 2b, 2d), mit einem Dämpfungselement (11, 11a, 11b, 11d), wobei die Dämpfungsvorrichtung (1, 1a, 1b 1c, 1d) ein Dissipationselement (6, 6a, 6b, 6c, 6d, 9, 9a, 9b, 9c) aufweist, **dadurch gekennzeichnet, dass** das Dissipationselement bis zum Überschreiten einer maximalen Relativkraft zwischen dem Anker (2, 2a, 2b, 2d) und einem durch den Anker (2, 2a, 2b, 2d) befestigten Befestigungsgegenstand (12, 12a, 12b, 12c, 12d) elastisch verformbar ist, und nach dem Überschreiten der maximalen Relativkraft elastisch-plastisch oder plastisch verformbar ist.

2. Dämpfungsvorrichtung nach Anspruch 1, **dadurch gekennzeichnet, dass** die Dämpfungsvorrichtung (1, 1a, 1b, 1c, 1d) derart gestaltet ist, dass sie bis zum Überschreiten der maximalen Relativkraft als Feder-Dämpfer-Element wirkt.

3. Dämpfungsvorrichtung nach Anspruch 1 oder 2, **dadurch gekennzeichnet, dass** das Dissipationselement (6, 6a, 6b, 6c, 6d, 9, 9a, 9b, 9c) nach dem Überschreiten der maximalen Relativkraft schon unter Einwirkung einer Relativkraft die betragsmäßig kleiner als die maximale Relativkraft ist, plastisch verformbar ist.

4. Dämpfungsvorrichtung nach einem der Ansprüche 1 bis 3, **dadurch gekennzeichnet, dass** die Dämpfungsvorrichtung (1, 1a, 1b. 1c, 1d) als radiale Dämpfungsvorrichtung (1, 1a, 1b, 1c, 1d) ausgebildet ist, die sich radial zwischen der Durchführungsöffnung und einer Außenfläche erstreckt.

5. Dämpfungsvorrichtung nach einem der Ansprüche 1 bis 4, **dadurch gekennzeichnet, dass** die Dämpfungsvorrichtung (1, 1a, 1b, 1c, 1d) als eine achsparallele Dämpfungsvorrichtung (1, 1a, 1b, 1c, 1d) ausgebildet ist, die sich parallel zu der Durchführungsöffnung erstreckt.

6. Dämpfungsvorrichtung nach einem der Ansprüche 1 bis 5, **dadurch gekennzeichnet, dass** das Dissipationselement (6, 6a, 6c, 6d, 9, 9a, 9c) gebogen ist.

7. Dämpfungsvorrichtung nach einem der Ansprüche 1 bis 6, **dadurch gekennzeichnet, dass** ein achsparalleles Dissipationselement (6, 6a, 6b, 6c, 6d) vorgesehen ist.

8. Dämpfungsvorrichtung nach einem der Ansprüche 1 bis 7, **dadurch gekennzeichnet, dass** die Außenfläche der Dämpfungsvorrichtung (1, 1a, 1b, 1c) als Außenhülse (8, 8a, 8b, 8c) ausgebildet ist, und dass eine Wand der Durchführungsöffnung als Innenhülse (7, 7a, 7b, 7c) ausgebildet ist.

9. Dämpfungsvorrichtung nach einem der Ansprüche 1 bis 8, **dadurch gekennzeichnet, dass** das achsparallele Dissipationselement (6, 6a, 6b, 6c, 6d) einen Ring bildet, dessen Symmetrieachse sich parallel zu der Durchführungsöffnung erstreckt.

10. Dämpfungsvorrichtung nach einem der Ansprüche 1 bis 9, **dadurch gekennzeichnet, dass** die Dämpfungsvorrichtung (1) mehrere achsparallele Dissipationselemente (18) aufweist, die über einen Basisring (19) miteinander verbunden sind.

11. Dämpfungsvorrichtung nach einem der Ansprüche 1 bis 10, **dadurch gekennzeichnet, dass** das Dissipationselement (6, 6a, 6b, 6c, 6d, 9, 9a, 9b. 9c) und das Dämpfungselement (11, 11a, 11b, 11d) aus unterschiedlichen Kunststoffen hergestellt ist.

12. Dämpfungsvorrichtung nach einem der Ansprüche 1 bis 11, **dadurch gekennzeichnet, dass** das Dissipationselement (6, 6a, 6b, 6c, 6d, 9, 9a, 9b, 9c) oder das Dämpfungselement (11, 11a, 11b, 11 d) aus einem bewehrten, insbesondere einem mit Fasern bewehrten Kunststoff hergestellt ist.

13. Dämpfungsvorrichtung nach einem der Ansprüche 1 bis 12, **dadurch gekennzeichnet, dass** die Dämpfungsvorrichtung (1b) ein einstückiges Bauteil aufweist, mit einem ersten Teilbereich, der als Dissipationselement (6b, 9b) wirkt, und einem zweiten Teilbereich, der als Dämpfungselement (11 b) wirkt.

14. Dämpfungsvorrichtung nach einem der Ansprüche 1 bis 10, **dadurch gekennzeichnet, dass** das Dissipationselement (6d) eine Tellerfeder (22d) ist.

15. Befestigungsanordnung mit einer Dämpfungsvorrichtung nach einem der Ansprüche 1 bis 14 und einem Anker (2, 2a, 2b, 2d), **dadurch gekennzeichnet, dass** die Dämpfungseinrichtung (1, 1a, 1b, 1d) zumindest teilweise zwischen dem Anker (2, 2a, 2b, 2d) und einem Befestigungsgegenstand (12, 12a, 12b, 12d) angeordnet ist.

## Claims

1. Damping apparatus (1, 1a, 1b, 1c, 1d) having a through-hole for an anchor (2, 2a, 2b, 2d), having a damping element (11, 11a, 11b, 11d), wherein the damping apparatus (1, 1a, 1b, 1c, 1d) has a dissipation element (6, 6a, 6b, 6c, 6d, 9, 9a, 9b, 9c), **characterised in that** the dissipation element is, until a maximum relative force between the anchor (2, 2a, 2b, 2d) and a fastened article (12, 12a, 12b, 12c, 12d) fastened by the anchor (2, 2a, 2b, 2d) is exceeded, elastically deformable and, after the maximum relative force has been exceeded, is elastically-plastically or plastically deformable.

2. Damping apparatus according to claim 1, **characterised in that** the damping apparatus (1, 1a, 1b, 1c, 1d) is so constructed that it acts as a spring damper element until the maximum relative force is exceeded.

3. Damping apparatus according to claim 1 or 2, **characterised in that**, once the maximum relative force has been exceeded, the dissipation element (6, 6a, 6b, 6c, 6d, 9, 9a, 9b, 9c) is plastically deformable even under the action of a relative force which in terms of magnitude is less than the maximum relative force.

4. Damping apparatus according to one of claims 1 to 3, **characterised in that** the damping apparatus (1, 1a, 1b, 1c, 1d) is in the form of a radial damping apparatus (1, 1a, 1b, 1c, 1d) which extends radially between the through-hole and an outer surface.

5. Damping apparatus according to one of claims 1 to 4, **characterised in that** the damping apparatus (1, 1a, 1b, 1c, 1d) is in the form of an axially parallel damping apparatus (1, 1a, 1b, 1c, 1d) which extends parallel to the through-hole.

6. Damping apparatus according to one of claims 1 to 5, **characterised in that** the dissipation element (6, 6a, 6c, 6d, 9, 9a, 9c) is curved.

7. Damping apparatus according to one of claims 1 to 6, **characterised in that** an axially parallel dissipation element (6, 6a, 6b, 6c, 6d) is provided.

8. Damping apparatus according to one of claims 1 to 7, **characterised in that** the outer surface of the damping apparatus (1, 1a, 1b, 1c) is in the form of an outer sleeve (8, 8a, 8b, 8c); and **in that** a wall of the through-hole is in the form of an inner sleeve (7, 7a, 7b, 7c).

9. Damping apparatus according to one of claims 1 to 8, **characterised in that** the axially parallel dissipation element (6, 6a, 6b, 6c, 6d) forms a ring whose axis of symmetry extends parallel to the through-hole.

10. Damping apparatus according to one of claims 1 to 9, **characterised in that** the damping apparatus (1) has a plurality of axially parallel dissipation elements (18) which are connected to one another by means of a base ring (19).

11. Damping apparatus according to one of claims 1 to 10, **characterised in that** the dissipation element (6, 6a, 6b, 6c, 6d, 9, 9a, 9b, 9c) and the damping element (11, 11a, 11 b, 11 d) are made from different plastics materials.

12. Damping apparatus according to one of claims 1 to 11, **characterised in that** the dissipation element (6, 6a, 6b, 6c, 6d, 9, 9a, 9b, 9c) or the damping element (11, 11a, 11b, 11d) is made from a reinforced plastics material, especially a plastics material reinforced with fibres.

13. Damping apparatus according to one of claims 1 to 12, **characterised in that** the damping apparatus (1b) has a one-piece component having a first partial region which acts as dissipation element (6b, 9b) and having a second partial region which acts as damping element (11b).

14. Damping apparatus according to one of claims 1 to 10, **characterised in that** the dissipation element (6d) is a cup washer (22d).

15. Fastening arrangement having a damping apparatus according to one of claims 1 to 14 and having an anchor (2, 2a, 2b, 2d), **characterised in that** the damping device (1, 1a, 1b, 1d) is arranged at least partially between the anchor (2, 2a, 2b, 2d) and a fastened article (12, 12a, 12b, 12d).

## Revendications

1. Dispositif d'amortissement (1, 1a, 1b, 1c, 1d) avec une ouverture de passage pour un tirant (2, 2a, 2b, 2d), avec un élément d'amortissement (11, 11a, 11b, 11d) le dispositif d'amortissement (1, 1a, 1b, 1c, 1d) présentant un élément de dissipation (6, 6a, 6b, 6c, 6d, 9, 9a, 9b, 9c), **caractérisé en ce que** l'élément de dissipation est élastiquement déformable jusqu'à ce qu'une force relative maximale entre le tirant (2, 2a, 2b, 2d) et un objet à fixer (12, 12a, 12b, 12c, 12d) fixé par le tirant (2, 2a, 2b, 2d) soit dépassée, et élastiquement-plastiquement ou plastiquement déformable une fois que la force relative maximale a été dépassée.

2. Dispositif d'amortissement selon la revendication 1, **caractérisé en ce que** le dispositif d'amortissement (1, 1a, 1b, 1c, 1d) est conçu de telle sorte qu'il agit comme élément amortisseur à effet de ressort jusqu'à ce que la force relative maximale soit dépassée.

3. Dispositif d'amortissement selon la revendication 1 ou 2, **caractérisé en ce que** l'élément de dissipation (6, 6a, 6b, 6c, 6d, 9, 9a, 9b, 9c) est, une fois que la force relative maximale a été dépassée, plastiquement déformable même sous l'action d'une force relative dont le montant est inférieur à la force relative maximale.

4. Dispositif d'amortissement selon l'une des revendications 1 à 3, **caractérisé en ce que** le dispositif d'amortissement (1, 1a, 1b, le, 1d) est réalisé sous forme de dispositif d'amortissement radial (1, 1a, 1b, le, 1d), qui s'étend radialement entre l'ouverture de passage et une surface extérieure.

5. Dispositif d'amortissement selon l'une des revendications 1 à 4, **caractérisé en ce que** le dispositif d'amortissement (1, 1a, 1b, le, 1d) est réalisé sous la forme d'un dispositif d'amortissement (1, 1a, 1b, 1c, 1d) parallèle à l'axe, qui s'étend parallèlement à l'ouverture de passage.

6. Dispositif d'amortissement selon l'une des revendications 1 à 5, **caractérisé en ce que** l'élément de dissipation (6, 6a, 6c, 6d, 9, 9a, 9c) est incurvé.

7. Dispositif d'amortissement selon l'une des revendications 1 à 6, **caractérisé en ce qu'**il est prévu un élément de dissipation (6, 6a, 6b, 6c, 6d) parallèle à l'axe.

8. Dispositif d'amortissement selon l'une des revendications 1 à 7, **caractérisé en ce que** la surface extérieure du dispositif d'amortissement (1, 1a, 1b, 1c) est réalisée sous forme de manchon extérieur (8, 8a, 8b, 8c), et **en ce qu'**une paroi de l'ouverture de passage est réalisée sous forme de manchon intérieur (7, 7a, 7b, 7c).

9. Dispositif d'amortissement selon l'une des revendications 1 à 8, **caractérisé en ce que** l'élément de dissipation (6, 6a, 6b, 6c, 6d) parallèle à l'axe forme une bague dont l'axe de symétrie s'étend parallèlement à l'ouverture de passage.

10. Dispositif d'amortissement selon l'une des revendications 1 à 9, **caractérisé en ce que** le dispositif d'amortissement (1) présente plusieurs éléments de dissipation (18) parallèles à l'axe, qui sont reliés entre eux au moyen d'une bague de base (19).

11. Dispositif d'amortissement selon l'une des revendications 1 à 10, **caractérisé en ce que** l'élément de dissipation (6, 6a, 6b, 6c, 6d, 9, 9a, 9b, 9c) et l'élément d'amortissement (11, 11a, 11b, 11d) sont fabriqués dans des matières plastiques différentes.

12. Dispositif d'amortissement selon l'une des revendications 1 à 11, **caractérisé en ce que** l'élément de dissipation (6, 6a, 6b, 6c, 6d, 9, 9a, 9b, 9c) ou l'élément d'amortissement (11, 11a, 11b, 11d) est fabriqué en une matière plastique renforcée, en particulier une matière plastique renforcée par des fibres.

13. Dispositif d'amortissement selon l'une des revendications 1 à 12, **caractérisé en ce que** le dispositif d'amortissement (1b) présente une pièce d'un seul tenant, avec une première région partielle qui agit comme élément de dissipation (6b, 9b) et une deuxième région partielle qui agit comme élément d'amortissement (11b).

14. Dispositif d'amortissement selon l'une des revendications 1 à 10, **caractérisé en ce que** l'élément de dissipation (6d) est une rondelle-ressort (22d).

15. Système de fixation avec un dispositif d'amortissement selon l'une des revendications 1 à 14 et avec un tirant (2, 2a, 2b, 2d), **caractérisé en ce que** le dispositif d'amortissement (1, 1a, 1b, 1d) est disposé au moins partiellement entre le tirant (2, 2a, 2b, 2d) et un objet à fixer (12, 12a, 12b, 12d).
